# EUROPEAN PATENT APPLICATION

(11) **EP 2 336 906 A1**
(43) Date of publication of application: **22.06.2011**
(21) Application number: 09180068.0
(22) Date of filing: 21.12.2009
(51) Int. Cl.: G06F 17/30

(54) **Method and device to modify an electronic document from a mobile environment with server assistance**

(71) Applicant: Research in Motion Limited, Waterloo, Ontario N2L 3W8 (CA)
(72) Inventor: Martin, Daryl Joseph, Waterloo Ontario N2L 5Z5 (CA)
(74) Representative: Patel, Binesh

(57) **Abstract**

Methods and devices to modify an electronic document written in a markup language on a mobile communications device with assistance from a server. Objects referenced by the electronic document are evaluated by the server based on predefined object identifying criteria, identifying removable objects which, when rendered on a mobile communications device, may cause readability problems for a mobile user. The server creates a modified electronic document by inserting markup tags around at least one segment of the markup language corresponding to the removable object, and then transmits the modified electronic document to the mobile communications device. The mobile communications device initially displays the document with all objects included. In response to a user input instructing removal of one or more of the removable objects, the mobile device re-displays the document without displaying the one or more removable objects.

## Description

### FIELD OF THE APPLICATION

The present application relates generally to the field of mobile devices, and in particular to mobile devices that use assistance from a server to allow a mobile user to dynamically modify how markup language documents are shown on the mobile device.

### BACKGROUND

Mobile devices present unique usability challenges because of their small screens. The typical mobile device must be small and light enough to be carried by the typical user comfortably, and this often results in mobile device screens with a fraction of the size and/or resolution of typical desktop screens. However, most electronic documents, such as web pages, are designed to be viewed on a desktop screen. Thus, when a web page normally designed for viewing on a typical desktop screen is rendered on a mobile screen, the web page may look poorly formatted and may have graphics, text, or other objects that are out of place.

In more severe scenarios, a web page may be rendered so that some objects may be obscured by other objects, resulting in an unintelligible web page. For example, this may be caused by the presence of layout tables that assume a much wider screen than is available on a mobile device, or images that exceed the dimensions of the mobile device's screen.

### BRIEF SUMMARY

The present application discloses a method to allow a mobile communications device, with the assistance of a server, to remove items on a web page that are of no interest to, or are in the way of, a user. This method improves the usability of the mobile communications device while harnessing the comparatively more robust memory and processing resources of the server. Thus, a user is able to dynamically modify a web page from a mobile device without regard for any memory or processing limitations of the mobile device.

An electronic document written in a markup language is retrieved by a server. The objects referenced by the electronic document are evaluated by the server, identifying all objects which, if rendered on a mobile communications device, would tax the limited resources of a mobile communications device or cause readability problems for a mobile user. The server modifies all markup language segments corresponding to the identified objects, and then transmits a modified electronic document to a mobile communications device. By using the modifications in the markup language made by the server, the mobile communications device is able to modify or remove one or more identified objects with a minimum amount of processing and present an electronic document that offers better readability to a mobile user.

The present application discloses a method of providing a mobile communications device with an electronic document modified by a server to permit dynamic removal of objects by the mobile communications device, where the electronic document is written in a markup language. The server identifies an object within the electronic document as a removable object based on predefined object identifying criteria. The server then creates a modified electronic document by inserting markup tags around at least one segment of the markup language corresponding to the removable object, where the inserted markup tags indicate that the removable object is removable. The modified electronic document is then transmitted from the server to the mobile communications device.

Once the modified electronic document is received at the mobile communications device, the mobile communications device displays the modified electronic document on a display screen of the mobile communications device. Once the mobile communications device receives a user input instructing removal of the removable object from the display screen, the modified electronic document is re-displayed on the display screen without displaying the removable object, in response to the user input.

The present application also discloses a method of dynamically removing objects from the display of an electronic document on a mobile communications device. The mobile communications device sends a request for the electronic document from to a server, where the electronic document contains markup language. The modified electronic document is received at the mobile communications device from the server, where the modified electronic document includes markup tags inserted around at least one segment of the markup language of the electronic document corresponding to a removable object identified by the server. The inserted markup tags indicate that the removable object is removable. The modified electronic document is then displayed on a display screen of the mobile communications device. If a user input instructing removal of the removable object from the display screen is received, the modified electronic document is re-displayed on the display screen without displaying the removable object.

The present application discloses a server for providing a mobile communications device with an electronic document modified by the server to permit dynamic removal of objects by the mobile communications device, where the electronic document is written in a markup language. The server includes a communication subsystem to send and receive the electronic document over at least one communications network, a memory, a processor, an object identifier component, and a markup language modifier component. The object identifier component is executable by the processor and is configured to identify an object within the electronic document as a removable object based on predefined object identifying criteria. The markup language modifier component is executable by the processor and is configured to create a modified electronic document by inserting markup tags around at least one segment of the markup language corresponding to the removable object, where the inserted markup tags indicate that the removable object is removable. The communication subsystem is also configured to send the modified electronic document to the mobile communications device in response to a request from the mobile communications device for the electronic document.

The present application also discloses a mobile device. The mobile device includes a communication subsystem configured to communicate with a server to send a request for an electronic document to the server. The electronic document contains markup language. The communication subsystem is also configured to receive a modified electronic document at the mobile communications device from the server, where the modified electronic document includes markup tags inserted around at least one segment of the markup language of the electronic document corresponding to a removable object identified by the server, and where the inserted markup tags indicate that the removable object is removable. The mobile device also includes a display screen for displaying the modified electronic document, a memory, a user input device for receiving a user input instructing removal of the removable object from the display screen, a processor, and a browsing application executable by the processor and configured to re-display the modified electronic document on the display screen without displaying the removable object, in response to the user input.

The present application may be embodied in a computer readable medium having encoded on it computer executable instructions which, when executed by a processor, cause the processor to perform the operations of the methods described herein. In one aspect, the instructions include instructions to permit dynamic removal of objects by the mobile communications device where the electronic document is written in a markup language, instructions for identifying an object within the electronic document as a removable object based on predefined object identifying criteria, instructions for creating a modified electronic document by inserting markup tags around at least one segment of the markup language corresponding to the removable object where the inserted markup tags indicate that the removable object is removable, and instructions for transmitting the modified electronic document from the server to the mobile communications device.

In another aspect, the instructions may include instructions for sending a request for the electronic document from the mobile communications device to a server where the electronic document contains markup language, and instructions for receiving a modified electronic document at the mobile communications device from the server. The modified electronic document includes markup tags inserted around at least one segment of the markup language of the electronic document corresponding to a removable object identified by the server, and the inserted markup tags indicate that the removable object is removable. The instructions further include instructions for displaying the modified electronic document on a display screen of the mobile communications device, instructions for receiving a user input instructing removal of the removable object from the display screen, and instructions for re-displaying the modified electronic document on the display screen without displaying the removable object in response to the user input.

### DESCRIPTION OF THE FIGURES

Figure 1 shows a block diagram view of an exemplary mobile communications device, an exemplary server, and an exemplary communications network.

Figure 2 shows a block diagram view of an exemplary communications device.

Figure 3 shows a block diagram view of an exemplary server.

Figure 4 shows a flowchart of a method described in the present application.

Figure 5 shows a flowchart of another method described in the present application.

Figure 6 shows a flowchart of another method described in the present application.

Similar reference numerals may have been used in different figures to denote similar components.

### DESCRIPTION OF SPECIFIC EMBODIMENTS

Embodiments of the present application are not limited to any particular communications architecture, operating system, or client-server architecture. It can be appreciated by those skilled in the art that the electronic document referenced herein applies equally to all electronic documents written in a markup language, including but not limited to HTML web pages, .docx files, XML documents, and any other document in a markup language where data or information is organized by tags into arbitrary data structures.

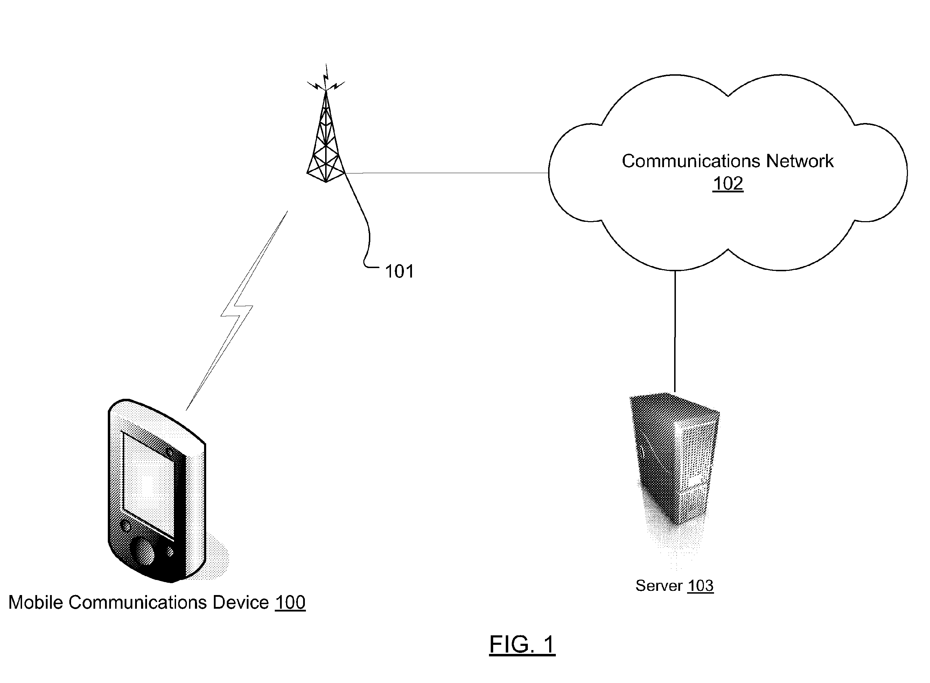

Referring now to the drawings, Figure 1 shows a block diagram view of an exemplary mobile communications device 100, wireless tower 101, communications network 102, and server 103 embodying the method described herein. Mobile communications device 100 is shown as a wireless device communicating with wireless tower 101, which in turn is part of a greater communications network 102. Server 103 communicates with mobile communications device 100 through communications network 102.

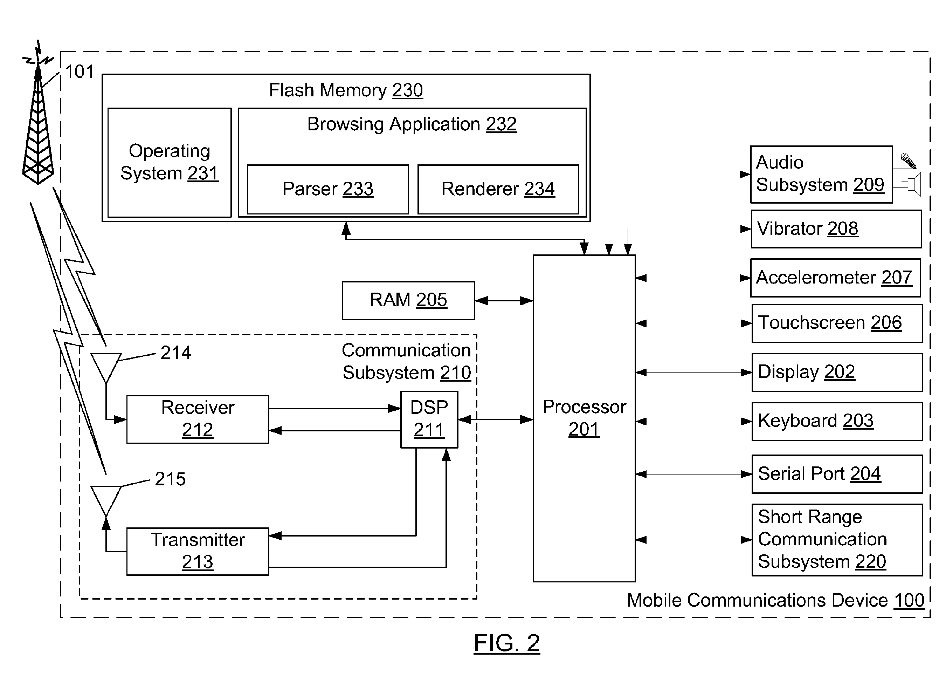

Figure 2 shows a block diagram view of exemplary mobile communications device 100, which includes a processor 201 interfacing with flash memory 230, RAM 205, touchscreen 206, accelerometer 207, display 202, keyboard 203, serial port 204, vibrator 208, audio subsystem 209, short-range communication subsystem 220 and communication subsystem 210. Audio subsystem 209 includes a microphone and a speaker. Communication subsystem 210 includes digital signal processing unit 211 interfacing with a receiver 212 and a transmitter 213, along with their respective antennas 214 and 215.

Flash memory 230 contains operating system 231, browsing application 232, parser 233 and renderer 234. Flash memory 230 also includes instructions to accept input and provide output to various components in mobile communications device 100, including display 202, keyboard 203, serial port 204, touchscreen 206, accelerometer 207, vibrator 208, audio subsystem 209, short-range communication subsystem 220, and communication subsystem 210.

Those skilled in the art can appreciate that browsing application 232, parser 233 and renderer 234 may be implemented as a separate application running under operating system 231 or may be implemented as an integral part of operating system 231.

Referring still to Figure 2, operating system software and various software applications such as browsing applications or communications applications used by the processor 201 are, in one example embodiment, stored in a persistent store such as flash memory 230 or any similar non-volatile storage store. Those skilled in the art can appreciate that the operating system, the browsing application, electronic documents, or any parts thereof, may be temporarily loaded into volatile storage such as RAM 205. Received or pending communication signals may also be stored to volatile or non-volatile storage.

In an example embodiment, processor 201 executes operating system functions and/or software applications. During data communications, a received signal such as an electronic document will be processed by the short-range communications subsystem 220 or communications subsystem 210 and input to the processor 201, which further processes the received signal for browsing application 232 for output to the display 202. A user of mobile communications device 100 may initiate a viewing of an electronic document by entering its address within browsing application 232 using keyboard 203 or from any other input device attached to serial port 221 or short-range communication subsystem 220. This address may be transmitted to the server 103 through the serial port 204, short-range communications subsystem 220 or communications subsystem 210. Similarly, an electronic document may be transmitted from server 103 to the mobile communications device 100 through serial port 204, short-range communications subsystem 220 or communications subsystem 210 to browsing application 232. Addresses, electronic documents, variables, and user preferences may be stored in any volatile or non-volatile storage store such as flash memory 230 or RAM 205. Those skilled in the art can appreciate that any data or information stored in volatile storage meant to be retained must be committed to non-volatile storage before any power-down or reset event.

Short-range communications subsystem 220 provides for communications between mobile communications device 100 and other similarly equipped devices, which need not necessarily be similar devices. In an example embodiment, short-range communications subsystem 220 may include an infrared device or a Bluetooth communications module. Similarly, serial port 204 provides for communications between mobile communications device 100 and other similarly equipped devices but not necessarily similar devices. Example embodiments of serial port 221 may include USB ports, parallel ports, or a RS-232 ports.

Communications network 102, in an example embodiment, is connected to a wireless network, of which wireless tower 101 is a part. Wireless tower 101 provides wireless radio coverage to mobile communications device 100. Wireless tower 101 may be a voice and data network such as GSM, UMTS, HSPDA, CDMA, IEEE 802.11, WiMax or any other wireless technology.

While Figures 1 and 2 depict an exemplary mobile communications device operating in a wireless communications network, those skilled in the art can appreciate that the methods and devices claimed herein applies equally to all communications devices, irrespective of the underlying communications network technology or the size or mobility of the device. Therefore, it is contemplated that mobile communications device 100 need not be a wireless communications device. Addresses and/or electronic documents may be transmitted and/or received over a wired communications network connected to mobile communications device 100 by, for example, serial port 204. Mobile communications device 100 may also lack communication subsystems 210 and 220 entirely and rely on periodic docking or synchronization with an external communications device or an external server to send or receive addresses and/or electronic documents or to communicate with server 103. In such an example embodiment, in docked mode the device 100 receives modified electronic documents from server 103 through its docking connection and stores them in non-volatile memory.

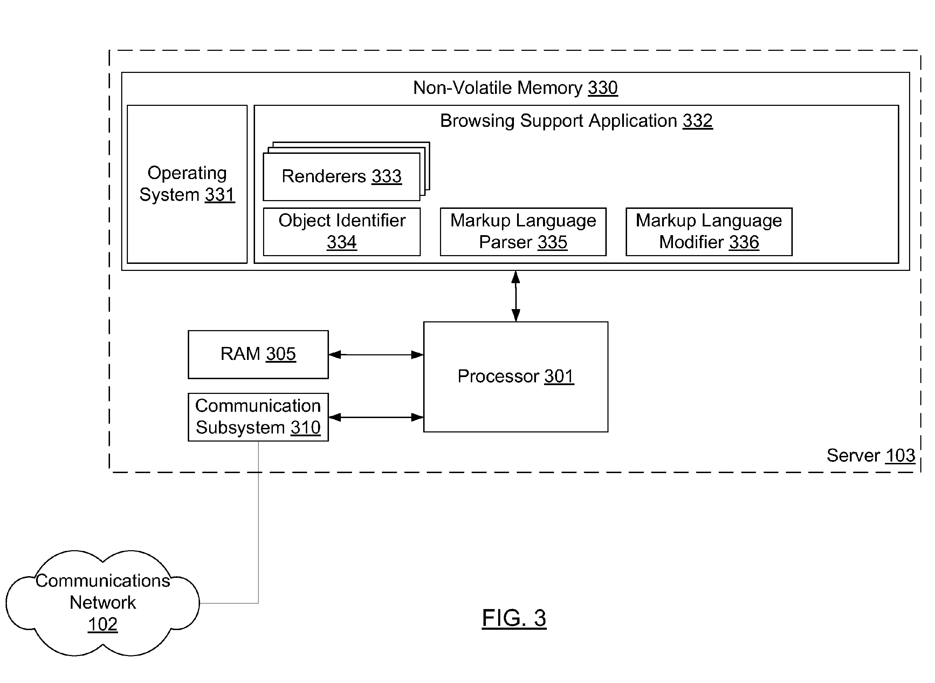

Figure 3 shows a block diagram view of exemplary server 103, which includes a processor 301 interfacing with non-volatile memory 130, RAM 305, and communication subsystem 310. Communication subsystem 310 may be a wired or a wireless network connection for communication with communications network 103.

Non-volatile memory 330, which contains operating system 331, browsing support application 332, renderers 333, object identifier 334, markup language parser 335, and markup language modifier 336, also includes instructions to accept input and output from communication subsystem 310. Browsing support application 332 may be implemented as a separate application running under operating system 331, such as an Apache™ web server running under UNIX™. Those skilled in the art can appreciate that browsing application 332 may also be implemented as an integral part of operating system 331.

Communications network 102, in an example embodiment, is connected to communication subsystem 310. Those skilled in the art can appreciate that server 103 may be connected to communication subsystem 310 in many different varieties of network topographies. For example, server 103 may form part of communications network 102 as a router in communications network 102 or wireless tower 101. Server 103 may also be located out of the immediate proximity of communications network 102 so that communications traffic between server 103 and communications network 102 must pass through intermediate networks, such as another communications network or the Internet. Server 103 may, in a further example embodiment, contain multiple communication subsystems such that communications traffic between communications network 102 and server 103 travels through communication subsystem 310, while another communication subsystem is used to locate and retrieve electronic documents from the Internet or another network. In yet another example embodiment, mobile communications device 100 or server 103 may itself contain the electronic document mobile communications device 100 is attempting to modify and thus server 103 requires no communications connection to a network outside of communications network 102 at all.

Referring still to Figure 3, one embodiment of the method will now be described.

An electronic document written in a markup language, such as a web page written in HTML, references many objects. Some referenced objects may tax the limited resources of a mobile communications device or cause readability problems for a mobile user if rendered on a mobile communications device, while other referenced objects may render and display on a mobile communications device with no resource or readability problems at all. To identify objects which may cause resource or readability problems from other objects, a user predefines object identifying criteria in object identifier 334. For example, predefined object identifying criteria may include the type and version of the mobile communications device's operating system, the version number of the mobile communications device's browsing application, the size of the mobile communications device's screen, the capabilities of the mobile communications device's browsing application, the memory or processing capabilities of the mobile communications device, the bandwidth available to the mobile communications device, or the cost of sending a byte of data to the mobile communications device. It can also be appreciated that a user of mobile communications device 100, an administrator, or any other user may predefine object identifying criteria as well.

A user of mobile communications device 100 wants to view the electronic document. To do so, the user causes a server 103 to retrieve the electronic document. The electronic document may be found at any location, such as locally on server 103, locally on the mobile communications device 100, at a location in communications network 102, at a location in a network connected to communications network 102, or at any location on the global Internet. Those skilled in the art can appreciate that various ways may be used to locate the electronic document, such as by using a search engine, by the user inputting an address where the electronic document may be found, or by using an index to locate the relevant electronic document. Multiple copies or revisions of the electronic document may also be located, in which case the user may be able to choose one amongst multiple copies or revisions found. Alternatively, tie-breaking rules may be used to automatically choose one amongst multiple copies or revisions, for example based on the date of publication or modification.

Once the electronic document is located by server 103, it is rendered by one or more of the renderers 333 in browsing support application 332. Browsing support application 332 may contain one or more renderers. Each renderer in server 103 corresponds to a version or type of renderer used by one or more mobile communications devices. In the exemplary case of mobile communications device 100 and server 103, one of the renderers 333 in browsing support application 332 in server 103 corresponds to renderer 234 in browsing application 232 in mobile communications device 100. Server 103 may also contain other renderers which correspond to mobile communications devices other than mobile communications device 100.

Once the electronic document is located by server 103, server 103 renders the electronic document using a renderer corresponding to the mobile communications device that had requested the electronic document. By rendering the electronic document on server 103 using a renderer corresponding to the mobile communications device that had requested the electronic document, object identifier 334 is able to determine how the electronic document will ultimately be rendered and shown on the mobile communications device. Using predefined object identifying criteria, object identifier 334 is then able to identify any objects which may tax the limited resources of the mobile communications device or cause readability problems for a mobile user using the mobile communications device.

Server 103 may identify the mobile communications device that had requested the electronic document by a unique identifier such as an IMEI, and apply predefined object identifying criteria which are specific to that particular mobile communications device.

Those skilled in the art can also appreciate that server 103 does not need to identify the unique mobile communications device that had requested the electronic document, but merely identify certain characteristics of the mobile communications device that had requested the electronic document. For example, by identifying the type or version of the mobile communications device's operating system as belonging to the BlackBerry® Curve™ family, predefined object identifying criteria specific to the BlackBerry® Curve™ may be applied by object identifier 334 to determine the objects which may tax the limited on-board resources of a BlackBerry® Curve ™ or cause readability problems on a BIackBerry® Curve™ display.

Determining characteristics of or the type of mobile communications device 100 for the purpose of identifying a suitable renderer or suitable predefined object identifying criteria may be interchangeably referred to herein as identifying the "type" or "class" of the mobile communications device 100. It will be appreciated that the "type" or "class" of mobile communications device 100 may refer to one or more devices having a particular screen size or resolution, or one or more devices having a particular rendering engine. Other common features may be used as the basis for grouping devices into a particular type or class.

Alternatively, a renderer corresponding to the mobile communications device that had requested the electronic document does not need to be present in server 103. No characteristics of the mobile communications device may need to be expressly identified by the server 103. Instead, server 103 may simply render using a generic renderer. Object identifier 334 may then use generic predefined object identifying criteria to identify objects may tax the limited resources of a typical mobile communications device or cause readability problems for a mobile user using a typical mobile communications device. For example, generic predefined object identifying criteria may include typical mobile device characteristics such as a screen size of 320 x 320 pixels or a browsing application supporting only basic HTML. Using these generic predefined object identifying criteria, object identifier 334 will identify all objects which exceed 320 pixels in any dimension when rendered, and all objects which require more than basic HTML to function.

In another example, server 103 may not include a renderer at all. Similar to the above, server 103 may assume that the mobile communications device requesting the electronic document has typical characteristics and use the same generic predefined object identifying criteria as mentioned above. Without rendering the electronic document, server 103 may parse the markup language of the electronic document or prefetch objects referenced in the electronic document and identify objects which exceed these generic predefined object identifying criteria. For example, using these generic predefined object identifying criteria, object identifier 334 will identify all objects which exceed 320 pixels in any dimension, and all objects which require more than basic HTML to function.

In the above examples, it can be appreciated that all predefined object identifying criteria may also be configurable by any user through preference settings.

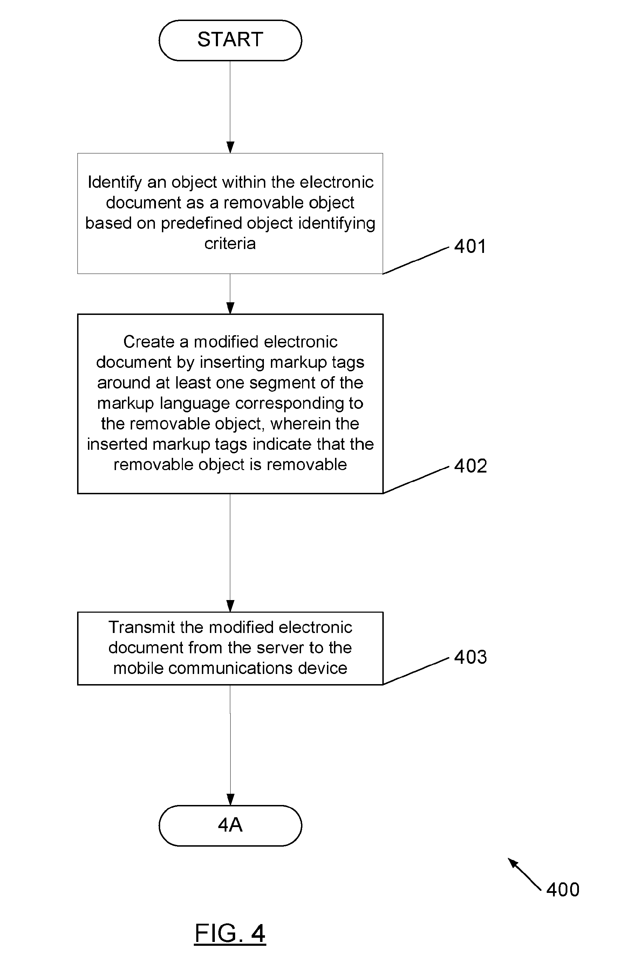

Referring now to Figures 3 and 4, once the electronic document is rendered in server 103 using a renderer corresponding to the mobile communications device that had requested the electronic document (in this example mobile communications device 100), object identifier 334 identifies objects referenced in the electronic document based on predefined object identifying criteria, as in step 401.

Based on predefined object identifying criteria, various objects referenced in the electronic document are identified by the object identifier 334 in server 103 as having the potential to tax the limited resources of a mobile communications device or cause readability problems for a mobile user if rendered on a mobile communications device. For example, if a mobile communications device has a screen size of 320 x 320 pixels, one of the predefined object identifying criteria may identify all objects exceeding 320 pixels in width or 320 pixels in height. In another example, if a mobile communications device has limited memory and processing capabilities, one of the predefined object identifying criteria may identify active objects or scripts exceeding a certain computational complexity. In yet another example, if the cost of sending a byte of data to the mobile communications device 100 is expensive, one of the predefined object identifying criteria may identify all objects exceeding a certain size threshold. In a further example, the server may render the electronic document using a standard renderer and also render the electronic document using a renderer corresponding to the mobile communications device; one of the predefined object identifying criteria may identify all objects that are rendered differently by the two renderers.

The server may prefetch one or more objects referenced by the markup language of the electronic document in order to determine whether an object exceeds predefined object identifying criteria.

In all of these examples, the server uses its more robust memory, processing resources, and more complex algorithms to identify all objects referenced in an electronic document that may cause readability problems for a mobile user if rendered on a mobile communications device. These are objects which the user may want to remove in order to view the electronic document more easily. In the description herein, an object that is identified by the server based on the predefined object identifying criteria may be referred to as a "removable object".

It can be appreciated by those skilled in the art that the objects identified by object identifier 334 based on predefined object identifying criteria are not limited to graphics or active controls, but may also include text, style definitions, scripts, formats unsupported by the mobile communications device, tables, swf ShockWave, Adobe Flash, images, animations, PDF, video, or any other element that may be on a web page or a document written in a markup language as well.

Once the object identifier 334 has identified at least one removable object, markup language parser 335 parses the markup language in the electronic document and locates all segments of the markup language in the electronic document that corresponds to each identified removable object. Markup language modifier 336 in server 103 creates a modified electronic document by inserting markup tags around at least one segment of the markup language corresponding to the removable object, where the inserted markup tags indicate that the removable object is removable, as in step 402. To do so, markup language modifier 336 may modify the original electronic document in place. Markup language modifier 336 may also make a new copy of the original electronic document and modify the markup language that corresponds to the identified removable objects in the new copy of the electronic document.

Depending on the removable object identified by object identifier 334, different segments of the markup language in the electronic document may be modified by markup language modifier 336. For example, if an image is identified, then it may be sufficient to modify only the corresponding <img src> tag. However, if a table nested within another table is identified, markup language modifier 336 may need to modify multiple non-consecutive segments of markup language in order to ensure that the table, if removed, would not negatively change the layout of the electronic document. The more robust memory and processing resources on server 103, as compared to mobile communications device 100, helps to make such computationally intensive determinations.

Modification of the markup language in the electronic document by markup language modifier 336 may include adding new markup language. For example, if a script has been identified by object identifier 334 because it exceeds a predefined computational complexity, markup language modifier 336 may insert additional tags (such as <ObjectRemovable> and </ObjectRemovable>) around the markup language that comprises the script identified. In another example, if an image has been identified by object identifier 334 because it exceeds a certain predefined size threshold, markup language modifier 336 may insert additional tags (such as <ObjectRemovable> and </ObjectRemovable>) around the markup language that references the image. Where multiple objects are identified, markup language modifier 336 may insert additional tags with unique identifiers (such as <ObjectRemovable ID=12345> and </ObjectRemovable ID=12345>). Where more than one segment of markup language corresponds with a single identified object, markup language modifier 336 may insert additional tags with unique identifiers (such as <ObjectRemovable Seg=1 > and </ObjectRemovable Seg=1>). If multiple objects are identified and at least one object corresponds to more than one segment of markup language, markup language modifier 336 may insert additional tags with unique identifiers (such as <ObjectRemovable ID=12345 Seg=1> </ObjectRemovable ID=12345 Seg=1> for the 1^{st} markup language segment of identified object "12345" and <ObjectRemovable ID=7074455 Seg=2> </ObjectRemovable ID=7074455 Seg=2> for the 2^{nd} markup language segment of identified object "7074455").

In all of the above examples, server 103 modifies the markup language referencing objects identified by object identifier 334 so that mobile communications device 100 is able to determine the removable objects identified and easily determine their corresponding markup language segments. This way, mobile communications device 100 does not have to know "how" to edit the markup language in the electronic document or how to identify possible "removable" objects in order to remove the identified objects because server 103 has determined all of the segments of markup language that correspond to the identified objects and marked them as such by inserting the additional mark-up tags. Thus, even if mobile communications device 100 has limited processing resources, it will be able to remove the identified removable objects easily.

Referring still to Figures 3 and 4, once the markup language is modified by markup language modifier 336, server 103 transmits a modified electronic document to mobile communications device 100 through communication subsystem 310, as in step 403.

Referring now to Figures 3, 4 and 5, in step 501 mobile communications device 100 receives a modified electronic document from server 103 that was created in step 402 and transmitted in step 403. This modified electronic document contains at least one segment of modified markup language corresponding to at least one object identified by the object identifier 334 in server 103 in step 401.

Once mobile communications device 100 receives an electronic document in an markup language, it is parsed using parser 233 to determine if there are modifications that were made by a server with a browsing support application. For example, modifications may be detected in an electronic document if it contains additional tags, such as <ObjectRemovable> and </ObjectRemovable>. In this embodiment, if modifications are detected the user of the mobile communications device 100 may be given a choice as to whether he wants to make the changes described by the modifications in the markup language. For example, if the tags <ObjectRemovable> and </ObjectRemovable> are detected by parser 233 around a segment of markup language referencing an image, the user may be asked whether he wishes to remove the image. If yes, then the renderer 234 will render the electronic document with the object removed by ignoring the segment of markup language surrounded by the tags <ObjectRemovable> and </ObjectRemovable>. The modified electronic document is then displayed with the object removed. If the user chooses not to remove the image, then the renderer 234 will render and display the electronic document with the original image by ignoring the tags <ObjectRemovable> and </ObjectRemovable>. In another example embodiment, the user may not be presented with a choice at all, and instead whether or not the renderer 234 will render and display the electronic document with objects removed will be based on predetermined user preference settings or group policies.

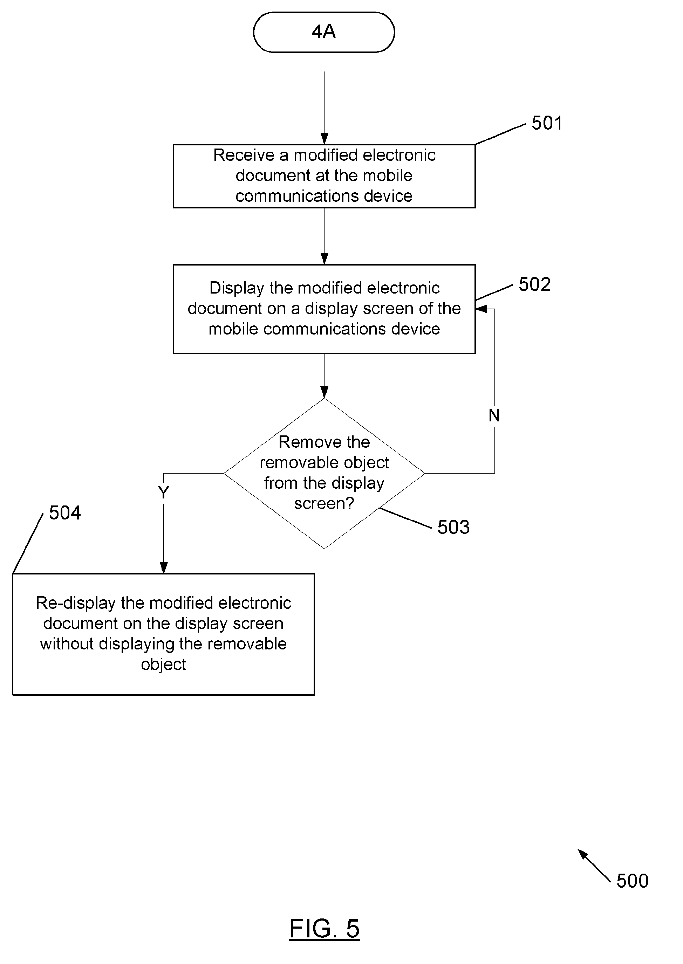

In a different embodiment, the mobile communications device 100 may initially display the electronic document without removing any objects, but may permit the user to subsequently remove removable objects. Referring now to Figures 2 and 5, mobile communications device 100 receives an electronic document in a markup language from server 103, as in step 501. Mobile communications device 100 may display the electronic document whether or not the electronic document contains modifications by server 103, as in step 502. Once the electronic document is displayed, the user of the mobile communications device 100 is given a choice as to whether he wants to make the changes described by the modifications in the markup language (as in step 503). If the user chooses to make the changes described by the modifications in the markup language, the modified electronic document is re-displayed with the identified object removed, as in step 504. One exemplary way to display the modified electronic document with the identified object removed is by ignoring at least one segment of the markup language corresponding to the removable object while rendering the modified electronic document.

If the user does not wish to remove the removable object from the display screen of the mobile communications device 100, the modified electronic document is displayed without any changes or modifications, as has already been done in step 502. It will be appreciated that by "choice", the present application does not necessarily require that the mobile communications device 100 poll the user as to whether the removable objects should be removed; but rather that the mobile communications device 100 is capable of receiving user input indicative of a desire to remove one or more of the removable objects.

The ability to remove one or more of the removable objects may be communicated to the user by visual cues or messages on display 202, a subtle vibration by vibrator 208, an audio cue by audio subsystem 209, or any combination of the above. One visual cue may be presented for multiple objects, or each object that may be changed may be presented with its own visual cues. Visual cues may also be initially hidden until a certain user input event is satisfied, such as by hitting a key, selecting a menu item, or enabling a preference setting. In one embodiment, removable objects may be given a visible outline in a distinctive colour. In another embodiment, removable objects may be marked with an icon or other graphic indicator of their "removability".

It will also be appreciated that a user may indicate his wish to make the changes described by the modifications in the markup language in a variety of ways, such as, for example, by a distinctive gesture on the touchscreen 206, by striking one or a combination of keys on the keyboard 203, by selecting a menu item using the trackball or other input device, by shaking the device accelerometer 207, or by voice command via the audio subsystem 209. To give one example, the segment of markup language corresponding to an image may be surrounded by <ObjectRemovable> tags, which causes the renderer 234 to display the image initially with a visual cue, such as a subtle blue outline. A user may then remove this image by making a gesture on it using touchscreen 206, such as a tap on the image and a swipe to the side, for example. In another example, if numerous objects are surrounded by <ObjectRemovable> tags in their corresponding markup language segments, then a menu option may be presented to the user to remove all of these objects at once. In yet another example, a user may select multiple, non-consecutive objects and remove all selected objects at once by making a flicking gesture on touchscreen 206. The gesture may include "dragging" a selected object to the edge of the display screen. Alternatively, a user may remove all of these objects at once by giving mobile communications device 100 a distinctive flick and causing an acceleration event to be registered in accelerometer 207. Other user inputs that may be interpreted by the device as a request to remove one or more removable objects will be understood by those ordinarily skilled in the art having regard to this description.

It will also be understood that instead of selecting removable objects that the user would like removed, the user input may select removable objects that are not to be removed and subsequent "removal" command, such as through a distinctive accelerometer event, may be applied only to the unselected removable objects. In this embodiment, the user input indicates which removable objects should stay or remain "pinned" to the display, whilst the unselected removable objects are discarded.

Once the mobile communications device 100 receives a user input instructing removal or one or more removable objects, the electronic document is re-rendered by renderer 234 and shown on display 202 without the removed objects. For example, if all removable objects are selected to be removed, the renderer 234 will re-render the electronic document while ignoring all markup language surrounded by <ObjectRemovable> tags. Furthermore, when re-rendering, renderer 234 may choose not to re-execute scripts or other active content previously executed, and simply carry forward any calculated results. In addition, any input fields containing user input, such as form fields, may be retained and repopulated so that a user does not lose data.

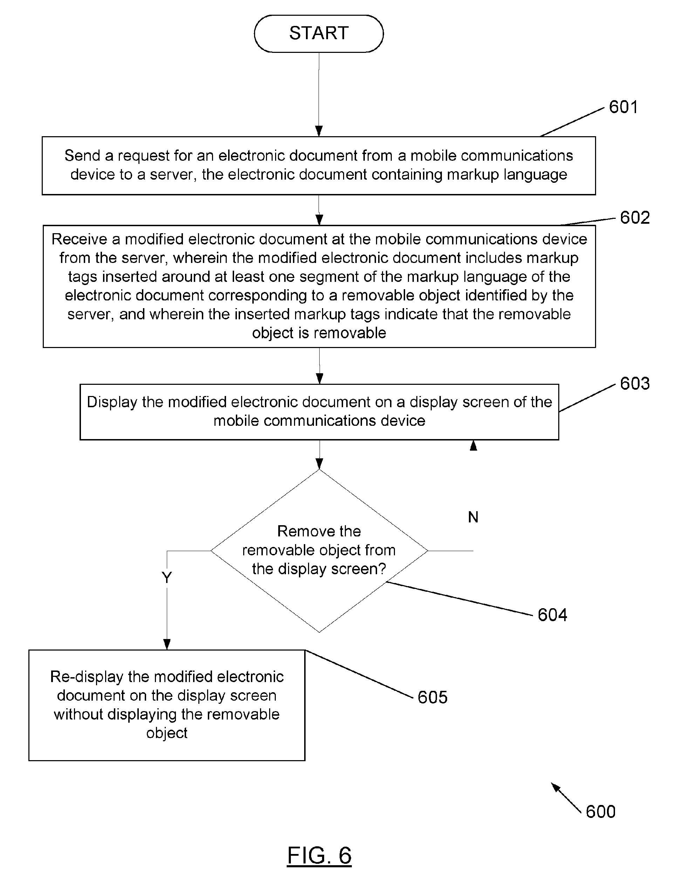

Referring now to Figures 2 and 6, another exemplary method of dynamically removing objects from the display of an electronic document on a mobile communications device will be described. Initially, a request for the electronic document is sent from the mobile communications device to a server, the electronic document containing markup language, as in step 601. The mobile communications device 100 then receives a modified electronic document from the server, where the modified electronic document includes markup tags inserted around at least one segment of the markup language corresponding to a removable object identified by the server, as in step 602. The inserted markup tags indicate that the removable object is removable. Mobile communications device 100 then displays the modified electronic document on display screen 202, as in step 603. The user is then asked whether he wishes to remove the removable object from display screen 202, as in step 604. If the user indicates that he wishes to remove the removable object, then mobile communications device 100 re-displays the modified electronic document on display screen 202 without displaying the removable object, as in step 605. If the user does not indicate that the removable object is to be removed, the modified electronic document is displayed on display screen 202 without any of the removable objects being removed, as has already been done in step 603. As stated above, it will be appreciated that the present application does not necessarily require that the mobile communications device 100 poll the user as to whether the removable objects should be removed, but rather that the mobile communications device 100 is capable of receiving user input indicative of a desire to remove one or more of the removable objects. Similarly, it will also be appreciated that a user may indicate his wish to make the changes described by the modifications in the markup language in a variety of ways, as already outlined above.

Any removal made to an electronic document by a user on mobile communications device 100 may be undone. This undo operation may operate for an individual object, for groups of objects, by electronic document regions, or all at once. For example, if the user wishes to undo the removal of all the objects from an electronic document, the renderer 234 may re-render the electronic document, including all segments of markup language surrounded by <ObjectRemovable> tags. Alternatively, the renderer 234 may re-render the electronic document while ignoring all modifications in the markup language made by server 103.

Objects removed by a user of the mobile communications device 100 may be tracked by mobile communications device 100 and shown on display 202 in a small taskbar or other menu. This taskbar may contain small thumbnails of each removable object that was removed when re-rendering the electronic document. This taskbar may be hidden and only shown when removable objects have been removed from an electronic document. A user may also manually cause the taskbar to be shown by the selection of a menu option or by predefined user preferences.

A user may undo any removals made to an electronic document by selecting one or more thumbnails and indicating that he wishes to undo the removal of the selected objects. Similar to the above, a user may indicate his wish to undo the removal of the selected objects in a variety of ways, such as by the selection of a menu option or by making a gesture on touchscreen 206, by striking one or a combination of keys on the keyboard 203, by shaking the device accelerometer 207, or by voice command via the audio subsystem 209.

In an alternative embodiment, a user may drag and drop, using touchscreen 206, a removable object to a new location in the electronic document. Thus, objects may be moved to another location in the electronic document. For example, if all identified removable objects are to be moved to the end of the electronic document, the mobile communications device 100 will move all segments of markup language surrounded by <ObjectRemovable> tags to the end of the electronic document before re-rendering and showing the electronic document on display 202.

In another alternative embodiment, instead of removing an object from an electronic document, a user may choose to keep that object and instead remove all other objects or all other removable objects in the electronic document.

In an example embodiment, portions of server 103 may be implemented as an Apache™ web server. An Apache™ web server may be configured to serve tags which have been are added by the author of an electronic document, or add tags which are added automatically by a custom script or a program.

It can be appreciated that all discussions above regarding user preferences or predefined object identifying criteria modifiable by a user applies equally to a user of a mobile communications device, a user of a server, a user of communications network 102, a remote user, or an administrator of any of the aforementioned.

Certain adaptations and modifications of the described embodiments can be made. Therefore, the above discussed embodiments are considered to be illustrative and not restrictive.

While variants have been described in detail in the foregoing specification, it will be understood by those skilled in the art that variations may be made without departing from the scope of the application, being limited only by the appended claims.

## Claims

1. A method of providing a mobile communications device (100) with an electronic document modified by a server (103) to permit dynamic removal of objects by the mobile communications device (100), wherein the electronic document is written in a markup language, comprising:
identifying (334, 401) an object within the electronic document as a
removable object based on predefined object identifying criteria;
creating (336, 402) a modified electronic document by inserting markup tags
around at least one segment of the markup language corresponding to the removable object, wherein the inserted markup tags indicate that the removable object is removable; and
transmitting (310, 403) the modified electronic document from the server to
the mobile communications device.

2. The method claimed in claim 1, wherein identifying includes selecting a renderer (333) associated with the mobile communications device (100), rendering the electronic document using the selected renderer (333), and applying the predefined object identifying criteria to the rendered electronic document to identify one or more removable objects.

3. The method claimed in claim 1 or claim 2, wherein the predefined object identifying criteria are based upon a characteristic of the mobile communications device (100).

4. The method claimed in any one of claims 1 to 3, wherein the predefined object identifying criteria include layout thresholds and objects which exceed the layout thresholds when rendered are identified as removable objects.

5. A method of dynamically removing objects by the mobile communications device (100), the method comprising the method claimed in any of claims 1 to 4 and further comprising:
receiving (501) the modified electronic document at the mobile
communications device (100);
displaying (502) the modified electronic document on a display screen of the
mobile communications device (100);
receiving (503) a user input instructing removal of the removable object from
the display screen; and
re-displaying (504) the modified electronic document on the display screen
without displaying the removable object, in response to the user input.

6. The method claimed in claim 5, wherein the modified electronic document is re-displayed (504) without displaying the removable object by ignoring the at least one segment of the markup language enclosed within the markup tags during a rendering operation.

7. The method claimed in claim 5 or claim 6, wherein the user input includes selection of the removable object displayed on the display screen.

8. The method claimed in any one of claims 5 to 7, wherein the user input includes a touchscreen gesture.

9. The method claimed in any one of claims 5 to 8, wherein displaying include displaying the removable object with a visual cue associated with the removable object indicating that the removable object may be removed.

10. A method of dynamically removing objects from the display of an electronic document on a mobile communications device (100), comprising:
sending (601) a request for the electronic document from the mobile
communications device (100) to a server (103), the electronic document containing markup language;
receiving (602) a modified electronic document at the mobile communications
device (100) from the server (103), wherein the modified electronic document includes markup tags inserted around at least one segment of the markup language of the electronic document corresponding to a removable object identified by the server, and wherein the inserted markup tags indicate that the removable object is removable;
displaying (603) the modified electronic document on a display screen of the
mobile communications device (100);
receiving (604) a user input instructing removal of the removable object from
the display screen; and
re-displaying (605) the modified electronic document on the display screen
without displaying the removable object, in response to the user input.

11. The method claimed in claim 10, wherein the modified electronic document is re-displayed without displaying the removable object by ignoring the at least one segment of the markup language enclosed within the markup tags during a rendering operation.

12. The method claimed in claim 10 or claim 11, wherein the user input includes selection of the removable object displayed on the display screen.

13. The method claimed in any one of claims 10 to 12, wherein the user input includes a touchscreen gesture.

14. The method claimed in any one of claims 10 to 13, wherein displaying include displaying the removable object with a visual cue associated with the removable object indicating that the removable object may be removed.

15. A mobile communications device (100), comprising:
a communication subsystem configured to communicate with the server (103) over a network;
a display screen;
a memory;
a user input device;
a processor; and
a browsing application stored in memory and containing computer-executable instructions which when executed configured the processor to perform the method claimed in any one of claims 10 to 14.

16. A server for providing a mobile communications device (100) with an electronic document modified by the server (103), the server comprising:
a communication subsystem to send and receive the electronic document
over at least one communications network;
a memory;
a processor;
an object identifier component; and
a markup language modifier component,
and wherein the object identifier component and markup language component are stored in memory and include computer-executable instructions which when executed configure the processor to perform the method claimed in any one of claims 1 to 4.
